# EUROPEAN PATENT APPLICATION

(11) **EP 3 399 410 A1**
(43) Date of publication of application: **07.11.2018**
(21) Application number: 17169451.6
(22) Date of filing: 04.05.2017
(51) Int. Cl.: G06F 9/445

(54) **METHOD AND SYSTEM FOR SOFTWARE INSTALLATION IN A VEHICLE**

(71) Applicant: Volvo Car Corporation, 40 531 Göteborg (SE)
(72) Inventor: Persson, Mr. Magnus, 47161 Myggenäs (SE); Sandbling, Eric, 43146 Mölndal (SE)
(74) Representative: Kransell & Wennborg KB

(57) **Abstract**

There is provided a method for over-the-air installation of software in a vehicle (102), the method comprising: receiving (202) installation instructions from a remote server (110); validating (204) a received data package; validating (206) pre-installation conditions of the vehicle determining if a software installation can be performed; installing (208) software in the vehicle; validating (210) post-installation conditions of the vehicle determining if the software is correctly installed; and providing (212) an installation report to the remote server. There is also provided a system (100)

## Description

### Field of the Invention

The present invention relates to a method and a system for remote installation of software in a vehicle. In particular, the present invention relates to a method and a system for over-the-air installation of software where updated software is received by a vehicle from a remote server.

### Background of the Invention

As more and more of the functionality in a vehicle is controlled by software, there is an increasing need for efficiently updating the vehicle software.

Traditionally, software upgrades have been scheduled and performed by a service technician in a workshop or at a service center where the software installation process could be manually supervised. Accordingly, if the software was not successfully installed, the service technician could diagnose the installation error and redo the installation. Thereby, it could be ensured that the vehicle was only operated with the correct software version.

Moreover, the need to ensure that the correct software is installed in the vehicle only increases as additional vehicle features are introduced. It is also important to ensure the compatibility of various vehicle systems. For example, active safety systems, driver assistance systems and self driving vehicles rely on the software to keep the vehicle passengers safe. At the same time, to simplify for the vehicle owner, it is desirable to provide over-the-air software updates to the vehicle from a remote location via a wireless connection to eliminate the need for the vehicle to be at a service center to perform the upgrade.

However, an important issue to consider when providing over-the-air software updates is to ensure that the software is installed correctly and that all functionality of the vehicle is maintained.

One solution to the above issue is to use a methodology where a dual memory-bank is used in the vehicle, so that the software is installed in one memory-bank, and where the old software version is kept in the other memory bank, where the updated memory bank is subsequently only used if the software installation is successful. Thereby, if a software installation is not successful, the old software version can still be used. However, to update the software, it may be necessary to take the vehicle to a service center or workshop for diagnostics and manual installation of the software, or for a technician to come to the vehicle to resolve the problem. Moreover, the use of dual memory-banks is both costly and complicated.

Accordingly, it is desirable to provide an over-the-air software installation process improving the chances of successful software installation.

### Summary

In view of above-mentioned and other drawbacks of the prior art, it is an object of the present invention to provide an improved method for over-the-air installation of software in a vehicle to ensure that the software is correctly installed.

According to one embodiment of the invention, there is provided a method for over-the-air installation of software in a vehicle, the method comprising: receiving installation instructions from a remote server; validating a received data package; validating pre-installation conditions of the vehicle determining if a software installation can be performed; installing software in the vehicle; validating post-installation conditions of the vehicle determining if the software is correctly installed; and providing an installation report to the remote server.

A data package should be interpreted in a broad manner, where a data package can be considered to comprise all the information required for performing a software installation, upgrade or update. Accordingly, the data package may comprise one or more sub-packages, data files, data structures and the like. Validating the data package comprises verifying that data files comprised in the data package are not corrupt, that all of the data has been received by the vehicle and that the data package comprises software which is compatible with the vehicle in general and with the current vehicle configuration in particular.

In the present context, validating pre-installation conditions means ensuring that conditions in the vehicle meets the requirements and are correct for performing a specific software installation safely and robustly.

Validating post-installation conditions of the vehicle means ensuring that conditions are correct after an installation attempt and that the expected software is activated.

It should be noted that the required conditions may be different for different installations, i.e. for different software. The required conditions may for example be determined by the vehicle based on properties of the received data file, or the data file itself may comprise requirements to be fulfilled by the vehicle.

Moreover, the vehicle may be referred to as the client in a client-server system, with the vehicle communicating with the remote server and receiving update information. "If" may throughout the disclosure refer to "whether".

The present invention is based on the realization that it is crucial to ensure that software is installed correctly in a vehicle in a non-supervised over-the-air installation process. To reduce the risk that the software installation is aborted or performed in a non-correct manner, validation of the pre- and post-installation conditions is performed. Moreover, it is also possible to prevent a software installation from being initiated if the required pre-installation conditions are not fulfilled, thereby increasing the convenience by saving the operator of the vehicle from unsuccessful installation attempts. "Installing software in the vehicle" may according to an example refer to "installing software in the vehicle provided that it is determined that a software installation can be performed".

According to one embodiment of the invention, validating the received data package may comprise verifying the authenticity and integrity of the received data package. The authenticity and integrity of each software file included in the received data package is verified using checksums and signatures. Thereby, it can be verified that the data package originates from a trusted source and that all required parts of the data package are received by the vehicle.

According to one embodiment of the invention, validating pre-installation conditions may comprise verifying that an expected vehicle configuration matches an actual vehicle configuration. The expected configuration, and validation keys needed to validate the vehicle configuration, is included in the installation instructions packaged into the data package. By validating the current vehicle configuration, scenarios where a software may be correctly installed but which is incompatible with the current vehicle configuration, are prevented. Thereby, problems relating to both safety and other functionality can be avoided. Accordingly, system dependencies are maintained and safeguarded.

According to one embodiment of the invention, validating pre-installation conditions may comprise: determining a state of charge of a vehicle battery; determining an expected energy consumption required for software installation; and determining if the battery can provide the expected energy required for software installation. Thereby, it is ensured that the vehicle has sufficient energy for completing the software installation, preventing an incomplete installation resulting from lack of power. The expected energy consumption for installation can be calculated based on information included in the installation instructions of the data package. Moreover, the state of charge of a vehicle battery, or another equivalent measure describing the available energy in the vehicle, can for example be determined by and/or requested from an energy management system of the vehicle.

According to one embodiment of the invention, validating pre-installation conditions may comprise determining that no person is located within the vehicle. Despite the described efforts for making sure that the software is installed correctly, there is always a risk that a software installation fails due to unforeseen events. Thereby, it is preferable to ensure that the vehicle is empty if for example the locking system should malfunction during or after the installation process. Moreover, ensuring that the vehicle is empty also prevents an operator of the vehicle from interrupting an ongoing installation process.

According to one embodiment of the invention, validating pre-installation conditions may comprise determining that the vehicle is locked and that an alarm system of the vehicle is activated. Thereby, it can be ensured that no one enters the vehicle during the installation process. Moreover, it is desirable that any alarm and anti-theft systems are activated to prevent the vehicle from being stolen during the installation process.

According to one embodiment of the invention, validating pre-installation conditions may comprise verifying that all control units of the vehicle to be updated respond to a request for communication. An installation procedure may involve a number of different control units to be updated or communicated with during the installation process. Accordingly, it is advantageous to verify that all of the involved control units are able to communicate prior to starting the installation. The verification may for example be performed by sending a ping to the involved control units.

According to one embodiment of the invention, validating post-installation conditions may comprise verifying that all control units of the vehicle which have been updated respond to a request for communication. A first step in verifying that the software has been correctly installed is to verify that all control units are communicative after the installation process is completed. Also here, a ping may be sent to the involved control units, or to all control units of the vehicle, to verify that they are active and responsive.

According to one embodiment of the invention, validating post-installation conditions may comprise verifying that an expected updated vehicle configuration matches an actual updated vehicle configuration. The verification can for example be performed using keys received in an update package.

According to one embodiment of the invention, the method may further comprise notifying a user of the vehicle that the software installation is completed. Thereby, it is not necessary for the operator of the vehicle to monitor the vehicle installation process.

According to one embodiment of the invention, notifying a user may comprise providing a visual indication in a user interface in the vehicle or providing a visual indication using an external indicator of the vehicle. Thereby, when using an external indicator the operator can see when the installation is completed, for example as indicated by flashing of the lights. Moreover, an interface in the vehicle such as a display may inform the operator about the status of the installation.

According to one embodiment of the invention, notifying a user may comprise providing a notification to a remote application. The remote application may for example be a smartphone application, a web-application or the like. The notification may also comprise information describing the status of the installation, such as if the installation is successful or not. The operator may also be informed of relevant features of the update, for example features regarding the functionality of the vehicle.

According a second aspect of the invention, there is provided a system for over-the-air installation of software in a vehicle, the system comprising: a wireless communication unit configured to communicate with a remote server; and an installation control unit configured to: receive installation instructions from a remote server; validate a received data package; validate pre-installation conditions of the vehicle to determine if a software installation can be performed; install software in the vehicle; validate post-installation conditions of the vehicle to determine if the software is correctly installed; and provide an installation report to the remote server.

According to one embodiment of the invention, the system may further comprise a visual indicator configured to provide a visual indication when a software installation is completed.

Additional effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a vehicle comprising a system according to an embodiment of the invention;
Fig. 2 is a flow chart outlining the general steps of a method according to an embodiment of the invention;
Fig. 3 is a flow chart outlining features of a method according to an embodiment of the invention;
Fig. 4 is a flow chart outlining features of a method according to an embodiment of the invention; and
Fig. 5 schematically illustrates a vehicle comprising a system according to an embodiment of the invention.

### Detailed Description of Example Embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

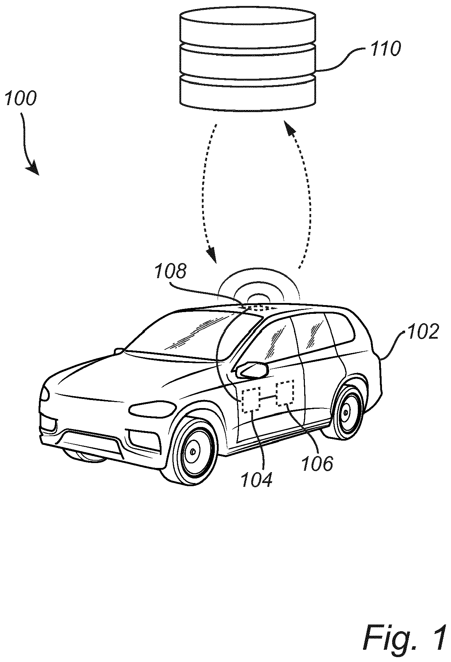

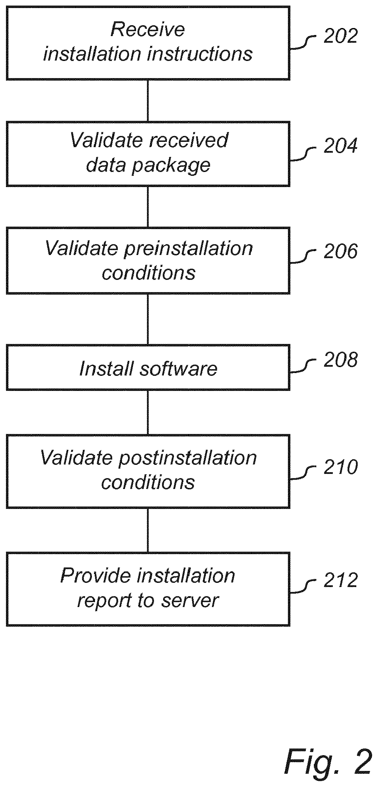

Fig. 1 schematically illustrates a system 100 for over-the-air installation of software in a vehicle 102 according to an embodiment of the invention. The general steps of a method for remote installation of software in a vehicle 102 are outlined in the flow chart of Fig. 2. In the following, various embodiments of the invention will be described with reference to the system of Fig. 1 and to the method of Fig. 2.

The system 100 comprises a wireless communication unit 108 for communicating with a remote server 110, a software installation control unit 104 and at least one vehicle functionality control unit 106 in the vehicle 102. The control unit 104, 106 may include a microprocessor, microcontroller, programmable digital signal processor or another programmable device. The control unit 104, 106 may also, or instead, include an application specific integrated circuit, a programmable gate array or programmable array logic, a programmable logic device, or a digital signal processor. Where the control unit 104, 106 includes a programmable device such as the microprocessor, microcontroller or programmable digital signal processor mentioned above, the processor may further include computer executable code that controls operation of the programmable device. The control unit 104, 106 may furthermore be a dedicated unit for software installation, or the functionality of the control unit 104, 106 may be incorporated in a general purpose control unit. The software installation control unit 104 and the vehicle functionality control units 106 may also be referred to as an electrical and/or engine control unit (ECU), or engine control module (ECM).

The software installation control unit 104 is configured to perform the method according to various embodiments of the invention. In particular, the software installation control unit 104 is responsible for performing the installation, and for performing the pre-and post-installation validations. Accordingly, the installation control unit 110 communicates with all of the vehicle functionality control units 108 involved in the installation process.

As outlined by the flow chart of Fig. 2, the method comprises: receiving 202 installation instructions from a remote server 110. The installation instructions comprise a data package which is subsequently validated 204. Next, the method comprises validating 206 pre-installation conditions of the vehicle determining if a software installation can be performed; installing 208 the software in the vehicle; validating 210 post-installation conditions of the vehicle determining if the software is correctly installed; and providing 212 an installation report to the remote server.

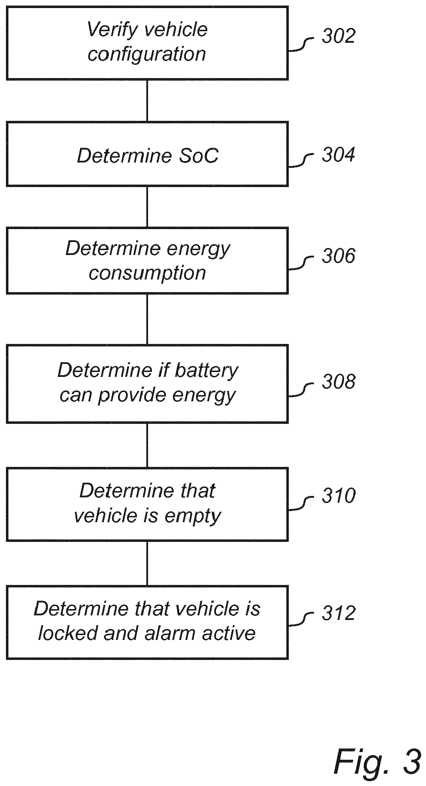

Fig. 3 is a flow chart outlining steps to perform during validation of pre-installation conditions according to various embodiments of the invention. It should be noted that it is not required to perform all of the described pre-installation validations, and it is further not required to perform them in the order exemplified herein.

Validating pre-installation conditions comprises verifying 302 that an expected vehicle configuration matches an actual vehicle configuration so that the received data package is the correct suited for the actual current vehicle configuration.

Validating pre-installation conditions also comprises determining 304 a state of charge of a vehicle battery, determining 306 an expected energy consumption required for software installation; and determining 308 if the battery can provide the expected energy required for software installation.

Moreover, validating pre-installation conditions comprises determining 310 that no person is located within the vehicle and further determining 312 that the vehicle is locked and that an alarm system of the vehicle is activated, i.e. locking and arming the vehicle.

Validating pre-installation conditions also comprises verifying 314 that all control units of the vehicle to be updated respond to a request for communication. This can be performed by sending a ping to all of the relevant control units. It is also possible to send a ping to all control units of the vehicle to verify an overall functionality of the vehicle prior to installation.

Once all of the selected pre-installation validations are completed, the software can be installed.

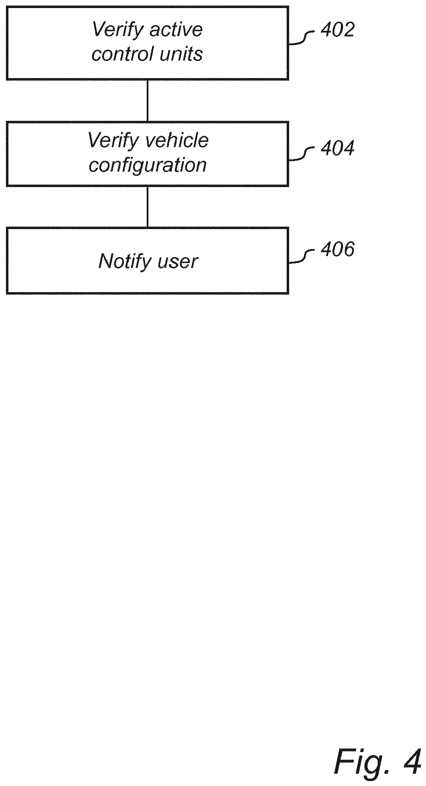

After completion of the software installation, a post-installation validation is performed to ensure that the vehicle is fully functional. Various post-installation steps are exemplified in the flow chart of Fig. 4.

Validating post-installation conditions comprises verifying 402 that all control units of the vehicle which have been updated respond to a request for communication. This can also be performed by sending a ping to the relevant control units. However, it may be advantageous to verify that all of the control units of the vehicle are active after the installation is complete. Furthermore, validating post-installation conditions comprises verifying 404 that an expected updated vehicle configuration matches an actual updated vehicle configuration.

In addition to performing the described post-installation steps in the vehicle, post-installation steps may also comprise notifying 406 a user of the vehicle that the software installation is completed. A user may for example be notified by provision of a visual indication in a user interface in the vehicle or by provision of a visual indication using an external indicator of the vehicle. An external visual indication may be flashing of exterior lights or information provided in a display visible from the outside of the vehicle. The information may also be provided to the user by means of a HMI (human-machine interface) in the vehicle.

Moreover, notifying a user may also comprise providing a notification to a remote application. The remote application may be a smartphone app, an internet interface, a mail notification or the like.

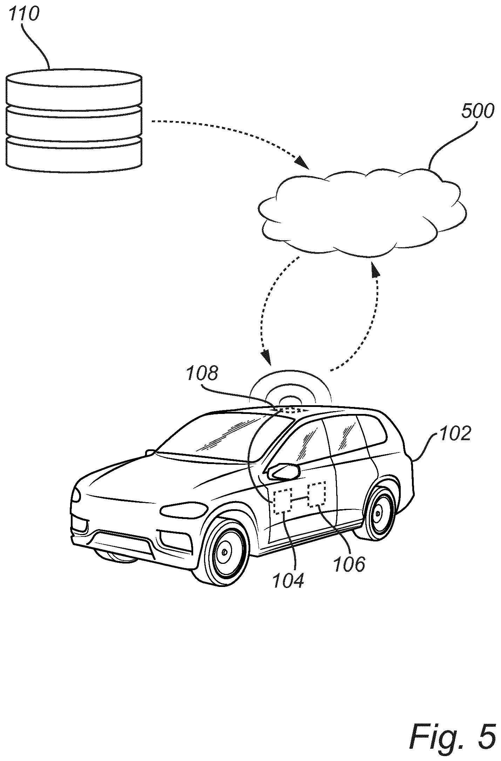

Fig. 5 schematically illustrates an example embodiment of a system for over-the-air installation wherein the vehicle 102 communicates with external sources via a cloud environment 500. A cloud environment can act as an intermediate layer between the client vehicle 102 and the server 110, and the cloud can also provide access to a wide range of functionalities to the vehicle.

Even though the invention has been described with reference to specific exemplifying embodiments thereof, many different alterations, modifications and the like will become apparent for those skilled in the art. Also, it should be noted that parts of the method and system may be omitted, interchanged or arranged in various ways, the method and system yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for over-the-air installation of software in a vehicle (102), the method comprising:
receiving (202) installation instructions from a remote server (110);
validating (204) a received data package;
validating (206) pre-installation conditions of the vehicle determining if a software installation can be performed;
installing (208) software in the vehicle;
validating (210) post-installation conditions of the vehicle determining if the software is correctly installed; and
providing (212) an installation report to the remote server.

2. The method according to claim 1, wherein validating the received data package comprises verifying the authenticity and integrity of the received data package.

3. The method according to claim 1 or 2, wherein validating pre-installation conditions comprises verifying (302) that an expected vehicle configuration matches an actual vehicle configuration.

4. The method according to any one of the preceding claims,
wherein validating pre-installation conditions comprises:
determining (304) a state of charge of a vehicle battery;
determining (306) an expected energy consumption required for software installation; and
determining (308) if the battery can provide the expected energy required for software installation.

5. The method according to any one of the preceding claims,
wherein validating pre-installation conditions comprises determining (310) that no person is located within the vehicle.

6. The method according to any one of the preceding claims,
wherein validating pre-installation conditions comprises determining (312) that the vehicle is locked and that an alarm system of the vehicle is activated.

7. The method according to any one of the preceding claims,
wherein validating pre-installation conditions comprises verifying (314) that all control units of the vehicle to be updated respond to a request for communication.

8. The method according to any one of the preceding claims,
wherein validating post-installation conditions comprises, verifying (402) that all control units of the vehicle which have been updated respond to a request for communication.

9. The method according to any one of the preceding claims,
wherein validating post-installation conditions comprises verifying (404) that an expected updated vehicle configuration matches an actual updated vehicle configuration.

10. The method according to any one of the preceding claims, further comprising notifying (406) a user of the vehicle that the software installation is completed.

11. The method according to any one of the preceding claims,
wherein notifying a user comprises providing a visual indication in a user interface in the vehicle or providing a visual indication using an external indicator of the vehicle.

12. The method according to any one of the preceding claims,
wherein notifying a user comprises providing a notification to a remote application.

13. A system (100) for over-the-air installation of software in a vehicle (102), the system comprising:
a wireless communication unit (108) configured to communicate with a remote server; and
an installation control unit (104) configured to:
receive installation instructions from a remote server;
validate a received data package;
validate pre-installation conditions of the vehicle to determine if a software installation can be performed;
install software in the vehicle;
validate post-installation conditions of the vehicle to determine if the software is correctly installed; and
provide an installation report to the remote server.

14. The system according to claim 13, further comprising a visual indicator configured to provide a visual indication when a software installation is completed.

15. A vehicle (102) comprising a system (100) according to claim 13 or 14.
